# EUROPEAN PATENT APPLICATION

(11) **EP 3 858 147 A1**
(43) Date of publication of application: **04.08.2021**
(21) Application number: 19864142.5
(22) Date of filing: 28.08.2019
(51) Int. Cl.: A23J 3/00, A23J 3/16

(54) **LIVESTOCK MEAT-LIKE PROCESSED FOOD PRODUCT, PRODUCTION METHOD THEREFOR, AND ADDITIVE FOR LIVESTOCK MEAT-LIKE PROCESSED FOOD PRODUCT**

(30) Priority: 27.09.2018 JP 2018182483
(71) Applicant: Nihon Shokuhin Kako Co., Ltd., Tokyo 100-0005 (JP)
(72) Inventor: OGAWA, Yusuke, Fuji-shi, Shizuoka 417-8530 (JP)
(74) Representative: Dehns
(86) International application number: PCT/JP2019/033679
(87) International publication number: WO 2020/066437

(57) **Abstract**

The present invention provides: a livestock meat-like processed food product which is provided at a low cost and which imparts less pasty texture derived from starch; a production method therefor; and an additive for a livestock meat-like processed food product. This livestock meat-like processed food product containing a vegetable protein-containing material and having livestock meat material content of at most 30 mass%, contains an oil/fat-modified starch as a raw material. The content of the oil/fat-modified starch is preferably 0.5-10 mass%. In addition, the livestock meat-like processed food product preferably further contains one or more materials selected from among animal protein materials excluding the aforementioned livestock meat material and vegetable protein materials excluding the aforementioned vegetable protein-containing material. Further, it is more preferable for the animal protein materials to be selected from among dairy protein materials and egg albumen, and for the vegetable protein materials to be selected from among pea protein materials and wheat protein materials; and it is most preferable for said processed food product to contain egg albumen.

## Description

### TECHNICAL FIELD

The present invention relates to: a meat analogue processed food product containing a fat-processed starch and a plant-protein-containing material, and having a meat material content of 30 mass% or less; a method for producing the meat analogue processed food product; and an additive for the meat analogue processed food product.

### BACKGROUND ART

Stemming from religious reasons or personal beliefs, further health appeal or uncertainty in the supply of meat raw materials, etc., there has been increasing market demand for meat analogue processed food products that use little or entirely no meat raw materials and contain large amounts of soybean material, grains, and other plant-sourced raw materials. Commonly, soybean protein is widely used as a plant-sourced raw material for a raw material of hamburgers, meatballs, and other meat analogue processed food products.

For example, Patent Document 1, listed below, discloses a meat-like food product that uses ground matter obtained by gelatinizing an aqueous plant protein mixture having a soybean protein concentration in a certain range and then grinding the gel.

Patent document 2, listed below, discloses a meat analogue processed food product obtained by mixing a specific textured soybean protein with a binding raw material, and molding and heating the mixture.

Patent document 3, listed below, discloses a meat analogue processed food product that uses a textured soybean protein material containing reducing sugar in a certain range.

Furthermore, patent document 4, listed below, discloses a hamburger-like food product for persons having dysphagia, the food product containing textured soybean protein in which starch and a soybean protein material are blended, and an emulsion in which separated soybean protein, water, and oil/fat are blended.

However, when the percentage of meat raw material blended into a processed food product is low, looseness and juiciness of the food product when chewed is compromised, and sliminess or other unnatural texture attributes are produced; therefore, it has been difficult to produce a meat analogue processed food product comparable to existing meat processed food products.

There are also cases in which starch is used as a raw material for a meat analogue processed food product, as is indicated in Patent Document 4, etc. Starch is less expensive than soybean protein, etc.; therefore, the production cost of a meat analogue processed food product can be minimized by blending a certain amount of starch into the food product. However, it is known that starch undesirably causes sliminess and pastiness when blended into a meat analogue processed food product as is indicated in, for example, Patent Document 4.

In addition to normal starches, processed starches that have undergone a variety of processes to improve physical characteristics are generally used as starches added to food products. Fat-processed starch, which is one type of processed starch, is a starch material used in coating materials for deep fried food, products kneaded with fishery meat, and meat products as well.

However, in such applications, in cases such as when, for example, starch is injected as a pickling solution into meat tissue and when starch is mixed as an auxiliary raw material into ground meat, the starch is intended to interact with the meat material, which is the main raw material.

Specifically, starch is mostly used for the purpose of somewhat increasing the amount of meat and the purpose of improving the texture of the meat material, and there are no reported cases of using fat-processed starch in a meat analogue processed food product containing very little or entirely no meat material, which is the main component the starch interacts with.

### [Related Art Documents]

### [Patent Documents]

[Patent Document 1] Japanese Laid-Open Patent Application No. 60-186252
[Patent Document 2] International Publication No. 2011/043384
[Patent Document 3] Japanese Laid-Open Patent Application No. 2013-34417
[Patent Document 4] Japanese Laid-Open Patent Application No. 2016-672250

### DISCLOSURE OF THE INVENTION

### [Problems the Invention is Intended to Solve]

An object of the present invention is to provide a meat analogue processed food product that is inexpensive and has little pastiness derived from starch, a method for producing the meat analogue processed food product, and an additive for the meat analogue processed food product.

### [Means for Solving the Aforementioned Problems]

In view of the circumstances described above, the present inventors have, through earnest research, discovered that a meat analogue processed food product having exceptional texture and other facets of performance can be produced by combining a fat-processed starch, a plant-protein-containing material, and as necessary, another protein material as well. Thus have the present inventors completed the present invention.

Specifically, one aspect of the present invention provides a meat analogue processed food product characterized by containing a fat-processed starch and a plant-protein-containing material and having a meat material content of 30 mass% or less.

Another aspect of the present invention provides a method for producing a meat analogue processed food product, the method characterized in that a raw material containing a fat-processed starch and a plant-protein-containing material and having a meat material content of 30 mass% or less is mixed, molded, and heated.

Furthermore, another aspect of the present invention provides an additive for a meat analogue processed food product containing a plant-protein-containing material and having a meat material content of 30 mass% or less, the additive for a meat analogue processed food product characterized by containing a fat-processed starch.

### [Effect of the Invention]

According to the present invention, it is possible to obtain a meat analogue processed food product that is inexpensive and has little pastiness derived from starch. Furthermore, it is possible to obtain a meat analogue processed food product having exceptional performance in terms of hardness, looseness, juiciness, etc., and having a texture similar to that of a meat processed food product.

### BEST MODE FOR CARRYING OUT THE INVENTION

The present invention relates to a meat analogue processed food product containing a fat-processed starch and a plant-protein-containing material, and having a meat material content of 30 mass% or less.

An exceptional meat analogue processed food product that is inexpensive, has little pastiness, and has a texture similar to a meat processed food product can be obtained by blending in a fat-processed starch and a plant-protein-containing material. The fat-processed starch can bond through hydrophobic interaction with not only proteins in meat materials but also various animal-sourced proteins and plant-sourced proteins, and integrate with the protein to form a starch-protein gel; this is surmised to be a mechanism for the superiority over a non-fat-processed starch in a textural or physical aspect. The present invention is not restricted to this surmisal.

The term "pastiness" in the present invention refers to a characteristic texture derived from starch, and is a general term for the sliminess, stickiness, and gel-like sensation specific to products of starch gelatinization. In the meat analogue processed food product, pastiness is a texture that provides the eater with a strange sensation and is undesirable.

The term "hardness" in the present invention refers to the extent of force needed to deform the gel by chewing the meat analogue processed food product. In the meat analogue processed food product, a hardness evaluation being lower (softer) means a texture that is more different from a meat processed food product and is undesirable.

The term "looseness" in the present invention refers to the extent by which the gel unevenly breaks apart in the same manner as meat when the meat analogue processed food product is chewed. In the meat analogue processed food product, a looseness evaluation being lower means a texture that is more different from a meat processed food product and is undesirable.

The term "juiciness" in the present invention refers to the amount of juice felt when eating the meat analogue processed food product. In the meat analogue processed food product, a juiciness evaluation being lower means a taste not well-liked in a meat processed food product and is undesirable.

Specifically, the quality of a meat analogue processed food product can be brought nearer to that of a normal meat processed food product by raising "hardness," "looseness," and "juiciness."

In the present invention, the meat analogue processed food product is a food product in which taste and texture identical to or resembling that of a normal meat processed food product are recreated with the minced meat content or another meat material content kept to no more than a certain amount, i.e., a meat analogue processed food product in which the content of a meat material is no more than a certain amount. In the meat analogue processed food product of the present invention, the content of a meat material is 30 mass% or less. Considering that the meat analogue processed food product of the present invention could be eaten by people who do not consume meat for religious reasons, personal beliefs, and various other reasons, it is preferred that the food product contains no meat whatsoever (a meatless processed food product).

A meat processed food product is a food product obtained by mixing and stirring together a meat material cut to a suitable size such as that of mincemeat, vegetables, spices, table salt, and/or other raw materials, molding the mixture, and then heat-treating the molded mixture; possible examples include sausage, hamburger, meat dumplings, pressed ham, chopped ham, salami, nuggets, fried meat cake filling, stuffed cabbage filling, meatloaf, terrine, meatballs, steamed meat bun filling, pot-sticker filling, *shaomai* filling, restructured meat products, etc.

Other than that the meat analog processed food product of the present invention contains a fat-processed starch and a plant-protein-containing material and the meat material content is 30 mass% or less, the meat analogue processed food product can be developed in the same manner as the prior-art meat processed food products described above, and the same method can be employed as the production method.

As the meat analogue processed food product of the present invention has the advantage that the product can be eaten even by people who do not consume meat for various reasons, the food product is preferably entirely free of meat materials, but another option is for the food product of the present invention to contain no more than a certain amount of a meat material, with the intention that it be possible to reduce cost and other disadvantages of meat processed food products in supply stability or quality stability of meat materials. There is no particular limitation as to the meat material that can be used as a raw material of the meat analogue processed food product, as long as the material is edible bird or animal meat that can be used in a normal meat processed food product; possible examples include livestock (pig, cow, sheep, goat, horse, etc.), fowl (chicken, quail, domestic duck, wild duck, wild/domestic hybrid duck, goose, turkey, etc.), venison, boar, and other meats. The meat material described above includes not only all manner of meats (muscle), but also skin, fat, gristle, cartilage, viscera, blood, and other tissues commonly used in meat processed food products. Furthermore, the meat material described above includes artificial meats/cultured meats obtained by artificially culturing animal cells and tissues.

There are also no particular limitations as to the other raw materials used in the meat analogue processed food product of the present invention; as with a normal meat processed food product, for example, vegetables, eggs, dairy products, seasonings, flours, starches, dietary fibers, polysaccharide thickeners, oils and fats, saccharides, salts, spices, colorants, preservatives, etc., can be used in accordance with the sought-after flavor, texture, physical properties, outward appearance, etc.

The fat-processed starch used in the meat analogue processed food product of the present invention is a starch obtained by adding and mixing oil and fat into a starch and aging the mixture for a certain time period at or above an ordinary temperature, and the properties of the starch are improved due to the oil and fat adhering and binding to the surfaces of the starch particles. There are no particular limitations as to the starch serving as a raw material as long as the starch can be used for a food product, but possible examples include corn starch, tapioca, rice starch, wheat starch, potato starch, sweet potato starch, mung bean starch, dogtooth-violet starch, kudzu starch, bracken starch, sago starch, mung bean starch, pea starch, etc. Of these examples, tapioca, corn starch, rice starch, and potato starch are preferred because they are inexpensive and easy to procure in large quantities. With any of these starches, in addition to the normal starch, a starch that has been improved with a breeding technique or a genetic engineering, such as types of non-glutinous species, waxy species, and high-amylose species, may be used.

Furthermore, in the present invention, various processed starches can be used as a raw material of the fat-processed starch. Specifically, the raw material starch may be chemically modifying treatment, namely oxidation, esterification, etherification, or cross-linking; processing treatment, namely pregelatinization, granulation, moist heat treatment, ball milling, fine grinding, heating, hot water treatment, bleaching, sterilization, acid treatment, alkali treatment, and enzyme treatment; or two or more of these treatments. A starch subjected to cross-linking is preferably used as the raw material starch.

There are no particular limitations as to the oil and fat as long as the oil and fat are edible; possible examples include flaxseed oil, perilla oil, Japanese perilla oil, walnut oil, safflower oil, grapeseed oil, soybean oil, sunflower oil, corn oil, cottonseed oil, sesame oil, rapeseed oil, peanut oil, olive oil, palm oil, coconut oil, beef tallow, lard, chicken fat, mutton tallow, whale oil, fish oil, and fractionated oils thereof, transesterified oils thereof, and other processed oils and fats, etc. Preferable examples are flaxseed oil, perilla oil, Japanese perilla oil, safflower oil, soybean oil, and grapeseed oil. Instead of oil and fat alone, soybean flour, etc., containing oil and fat can also be used. Furthermore, an emulsifier can be used in addition to the oil and fat.

The fat-processed starch is produced by subjecting the starch to an aging treatment after mixing in a small amount of oil and fat. In the present invention, the aging treatment involves storing the mixture of the starch and the oil and fat for a certain time at or above an ordinary temperature (e.g., 15°C). Considering productivity, the aging treatment is preferably carried out by, for example, letting put the starch mixture in a reaction machine, an extruder, a dryer, a tank, a vessel, a packaging material, etc., and treating the mixture at, for example, 30-150°C. There is no particular limitation as to the number of days of the aging treatment, but a higher temperature allows for a shorter time, e.g., 30 min to 2 months is preferred, and 1 hour to 1 month is more preferred.

The term plant-protein-containing material in the present invention means a food product raw material containing a plant-sourced protein used as a substitute for a meat material, this raw material having 10% or more protein content (preferably 15% or more and more preferably 20% or more) per dry weight. The protein content of individual plant-sourced food product raw materials can be found by referring to the values written in the "Standard Tables of Food Composition in Japan" published by the Japanese Ministry of Education, Culture, Sports, Science, and Technology. The plant-protein-containing material is preferably prepared from beans in terms of ease of procurement, cost, and protein content, and also in that beans do not have a considerable adverse effect on the flavor of the meat analogue processed food product. There are no particular limitations as to the beans as long as the beans are from seeds of legumes used in food products; possible examples include soybeans, peas, kidney beans, quail beans, broad beans, garbanzo beans, lentil beans, adzuki beans, mung beans, etc. There are no particular limitations as to the form of the plant-protein-containing material used in the present invention as long as the material is used as a substitute for meat material; the material can be selected as appropriate according to the properties and texture sought after in the meat analogue processed food product to be produced. Possible examples include crushed material, ground material, powder, paste, and other forms, and processed forms of bean curd (tofu), etc. Considering the function of the plant-protein-containing material of serving as a base for a meat substitution and recreating a texture similar to meat, the form is preferably not powder or liquid. A bean protein material, which is a food product additive obtained by separating and refining a protein component from beans, is preferably used as the plant-protein-containing material prepared from beans in terms of protein content and also in that a bean protein material would not have a considerable adverse effect on the flavor of the meat analogue processed food product. A soybean protein material, pea protein material, etc., are possible examples of the bean protein material. A combination of a plurality of plant-protein-containing materials may also be used.

Soybean protein material is a protein separated and refined from soybeans, and there are no particular limitations as to the production method therefor; for example, the raw material for the production can be defatted soybeans, which are a residue from which soybean oil has been extracted. There are also no particular limitations as to the nature of the soybean protein material; possible examples include granular, pulverulent, paste-form, fibrous, etc., and the nature can be selected as appropriate according to the properties and texture sought after in the meat analogue processed food product to be produced.

The content of the fat-processed starch in the meat analogue processed food product is not particularly limited, but can be 0.5-10 mass% in terms of the effects of the starch, and is preferably 1-7 mass%.

The meat analogue processed food product of the present invention preferably further contains, in addition to the fat-processed starch and the plant-protein-containing material, other protein materials, i.e., one or more material selected from animal-sourced protein materials excluding the meat material and plant-sourced protein materials excluding the plant-protein-containing material. The term of protein material used in this description means a protein that is a food-product-additive material separated and refined from a food product raw material. There are no particular limitations as to the other protein materials as long as the conditions described above are satisfied; for example, a material having the function of a "binder" in meat analogue food products can be used.

Considering the intent of the present invention, in the meat analogue processed food product of the present invention, the content of the meat material, relative to the total amount of meat material, plant-protein-containing material, animal-sourced protein material other than the meat material, and plant-sourced protein material other than the plant-protein-containing material (total amount of protein raw materials), is preferably 75 mass% or less, more preferably 50 mass% or less, and even more preferably 30 mass% or less.

In the present invention, the plant-protein-containing material is the base of the material substituting for meat, and the fat-processed starch is added to this material, whereby a meat analogue food product having exceptional texture and other facets of performance is obtained. Furthermore, when the other protein material previously-described is present, it is believed that more preferable effects are exhibited because the fat-processed starch and the other protein material interact with each other and an exceptional gel network is formed.

There are no particular limitations as to the animal-sourced protein material as long as it is not the meat material; for example, a milk protein material or an albumen can be used. Milk protein material is a protein separated and refined from bovine milk or another type of milk, and whey (milk serum) protein, casein, etc., can be used. Albumen is a protein separated and refined from chicken eggs or another type of eggs, and liquid albumen, albumen powder, etc., can be used.

There are no particular limitations as to the plant-sourced protein material as long as the material is not the previously-described plant-protein-containing material serving as the base of the meat substitution material; a protein material other than soybean protein material is preferred in terms of the effects, and for example, a pea protein material or a wheat protein material can be used. Pea protein material is a protein separated and refined from peas, and wheat protein material is a protein separated and refined from wheat; gluten etc., can be used.

As with the plant-protein-containing material, there are also no particular limitations as to the nature of the protein material described above; possible examples include granular, pulverulent, paste-form, fibrous, etc., and the nature can be selected as appropriate according to the properties and texture sought after in the meat analogue processed food product to be produced. Considering the function of the protein material as a "binder" to mutually interact with the fat-processed starch and form an exceptional gel network, the protein material is preferably in the form of a powder or liquid because it is desired that the material separates uniformly during production of the meat analogue food product. The above-described protein materials used in the examples described hereinafter are each pulverulent. The above-described protein materials may be used single or a plurality may be used in combination.

As is shown in the examples described hereinafter, when albumen is used in the meat analogue processed food product in addition to the fat-processed starch and the plant-protein-containing material, particularly significant effects are exhibited in terms of pastiness and other textures. This is presumably because the protein in the albumen and the fat-processed starch interact with each other more effectively and an exceptional gel network is formed. Therefore, the meat analogue processed food product of the present invention preferably contains albumen in addition to the fat-processed starch and the plant-protein-containing material.

In the meat analogue processed food product, the contained amounts of one or more material selected from animal-sourced protein materials excluding the meat material and plant-sourced protein materials excluding the plant-protein-containing material are not particularly limited, but in terms of the effects, 0.5-10 mass% by dried matter conversion is preferred, and 0.5-3 mass% is particularly preferred.

The present invention also provides a method for producing a meat analogue processed food product, the method characterized in that a raw material containing a fat-processed starch and a plant-protein-containing material and having a meat material content of 30 mass% or less is mixed, molded, and heated.

In the production method of the present invention, the blended amount of the fat-processed starch is not particularly limited, but can be 0.5-10 mass% in terms of the effects, and is preferably 1-7 mass%.

In the production method of the present invention, the previously-described other protein material, i.e., one or more material selected from animal-sourced protein materials excluding the meat material and plant-sourced protein materials excluding the plant-protein-containing material are preferably blended in addition to the fat-processed starch and the plant-protein-containing material. The blended amounts of the one or more material selected from animal-sourced protein materials excluding the meat material and plant-sourced protein materials excluding the plant-protein-containing material are not particularly limited, but in terms of the effects, 0.5-10 mass% by dried matter conversion is preferred, and 0.5-3 mass% is particularly preferred.

In the production method of the present invention, the substances previously described can be used as the fat-processed starch, the plant-protein-containing material, and the other protein material. As for the other raw materials, as previously described, normally used raw materials should be selected as appropriate in accordance with the type of the meat analogue processed food product to be produced. There are no particular limitations as to the timings at which the raw materials are blended in; the raw materials may be added simultaneously or sequentially. The other production steps should be carried out according to common procedure.

The present invention furthermore provides an additive for a meat analogue processed food product having a meat material content of 30 mass% or less, the additive containing a fat-processed starch.

By being added to a meat analogue processed food product having a meat material content of 30 mass% or less, the additive of the present invention can improve the texture, e.g., the hardness and looseness, of the meat analogue processed food product. Specifically, the additive of the present invention can be used as, for example, a texture-improving agent for a meat analogue processed food product having a meat material content of 30 mass% or less.

The meat analogue processed food product to which the additive of the present invention is applied preferably contains a plant-protein-containing material, typically a soybean protein material. Furthermore, it is preferred that the additive be added to a meat analogue processed food product that, in addition to the plant-protein-containing material, also contains the previously-described other protein material, i.e., the one or more material selected from animal-sourced protein materials excluding the meat material and plant-sourced protein materials excluding the plant-protein-containing material, and it is particularly preferred that the additive be added to a meat processed food product that contains albumen.

Factors such as the added amount of the fat-processed starch, which is an effective component of the additive, and the amounts of other components contained in the meat analogue processed food product should conform to what is previously stated.

### EXAMPLES

The present invention is described in detail on the basis of the following examples, but these examples are not provided by way of limitation on the present invention.

### Test example 1 (combining starch and animal-sourced protein material)

With the blended amounts of the raw materials being as shown in table 1, meatless hamburgers were prepared using the following procedure. Pulverulent soybean protein and water were mixed, after which rapeseed oil was added and evenly mixed to obtain an emulsion curd. Water-reconstituted granular soybean protein was added to the curd, then seasoning, protein material, cross-linked starch or fat-processed starch (oil/fat-processed cross-linked starch), iced water, onion, and breadcrumbs were added in the stated order, and the materials were mixed in a mixer, thus preparing a dough. The dough was molded into round shapes weighing 50 g each, the dough were baked (50 sec per side × 2 at 230°C) and steamed (15 min at 85°C) in that order, and the resultants were cooled, thus obtaining meatless hamburgers. A starch having tapioca starch as the raw material was used as the cross-linked starch or the fat-processed starch (oil/fat-processed cross-linked starch).

**[Table 1]**

| | | Comp. ex. 1 | Comp. ex. 2 | Comp. ex. 3 | Comp. Ex. 4 | Ex. 1 | Ex. 2 | Ex. 3 | Ex. 4 |
|---|---|---|---|---|---|---|---|---|---|
| Granular soybean protein | | 12 | 12 | 12 | 12 | 12 | 12 | 12 | 12 |
| Water for reconstituting soybean protein | | 36 | 36 | 36 | 36 | 36 | 36 | 36 | 36 |
| Chopped raw onion | | 15 | 15 | 15 | 15 | 15 | 15 | 15 | 15 |
| Soybean protein powder | | 3 | 3 | 3 | 3 | 3 | 3 | 3 | 3 |
| Water for making an emulsion curd | | 10 | 10 | 10 | 10 | 10 | 10 | 10 | 10 |
| Rapeseed oil | | 4 | 4 | 4 | 4 | 4 | 4 | 4 | 4 |
| Cross-linked starch | | 6 | 6 | 6 | 6 | - | - | - | - |
| Fat-processed starch | | - | - | - | - | 6 | 6 | 6 | 6 |
| Albumen powder | | - | - | - | - | - | 2 | - | - |
| Milk serum protein | | - | - | 2 | - | - | - | 2 | - |
| Casein sodium | | - | - | - | 2 | - | - | - | 2 |
| Breadcrumbs | | 4 | 4 | 4 | 4 | 4 | 4 | 4 | 4 |
| Seasoning | Soy sauce | 5 | 5 | 5 | 5 | 5 | 5 | 5 | 5 |
| | Sweet *sake* | 1 | 1 | 1 | 1 | 1 | 1 | 1 | 1 |
| | Sugar | 1 | 1 | 1 | 1 | 1 | 1 | 1 | 1 |
| | Bouillon | 0.7 | 0.7 | 0.7 | 0.7 | 0.7 | 0.7 | 0.7 | 0.7 |
| | Spice | 0.3 | 0.3 | 0.3 | 0.3 | 0.3 | 0.3 | 0.3 | 0.3 |
| Total | | 98 | 100 | 100 | 100 | 98 | 100 | 100 | 100 |

| | | | | | | | | | |
|---|---|---|---|---|---|---|---|---|---|
| granular soybean protein: Fuji Oil Co., Ltd. soybean protein powder: Fuji Oil Co., Ltd. cross-linked starch: Nihon Shokuhin Kako Co., Ltd. fat-processed starch: Nihon Shokuhin Kako Co., Ltd. albumen powder: Kewpie Corporation milk serum protein: Daiichi Kasei Co., Ltd. casein sodium: Daiichi Kasei Co., Ltd. | | | | | | | | | |

The meatless hamburgers thus obtained were sensory evaluated by six panelists on the basis of the following criteria, and the panelists discussed the evaluation results amongst themselves to determine a final evaluation. Each evaluated item was evaluated on a four-level scale, with the symbol "×" indicating that allowable performance for a hamburger was not achieved for that item, and the symbol "⊚" indicating that the hamburger had performance of a level comparable to a normal hamburger.

Hardness: evaluated using the four levels × (unacceptable), Δ (acceptable), ○ (good), and ⊚ (exceptional), with higher evaluation points equating to greater force being needed to deform the gel by chewing.

Looseness: evaluated using the four levels × (unacceptable), Δ (acceptable), ○ (good), and ⊚ (exceptional), with higher evaluation points equating to a greater extent to which the gel breaks up unevenly in the manner of meat when chewed.

Juiciness: evaluated using the four levels × (unacceptable), Δ (acceptable), ○ (good), and ⊚ (exceptional), with higher evaluation points equating to a greater amount of meat juice.

Lack of pastiness: evaluated using the four levels × (unacceptable), Δ (acceptable), ○ (good), and ⊚ (exceptional), with higher evaluation points equating to less pastiness.

Further, measurements were taken of a heating yield (N = 13) calculated from the weight difference before and after heating the dough and a breaking load (*N* = 12) determined using a rheometer. The breaking loads of the meatless hamburgers were measured using a rheometer (RE2-33005B (Yamaden Co., Inc.)) after warming samples at 20°C, the centers of the samples having each been hollowed out to be a diameter of 40 mm. The measurement was performed by vertically applying a load to each meatless hamburger using a cylindrical plunger, 12 mm in diameter, at a rate of 1 mm/sec. The results are shown in table 2.

**[Table 2]**

| | Heating yield (%) | Breaking load (g) | Hardness | Looseness | Juiciness | Lack of pastiness |
|---|---|---|---|---|---|---|
| Comp. Ex. 1 | 98.1 | 400±13 | Δ | Δ | ○ | × |
| Comp. Ex. 2 | 100.1 | 828±54 | ○ | Δ | ○ | × |
| Comp. Ex. 3 | 98.9 | 681±47 | ○ | Δ | ○ | × |
| Comp. Ex. 4 | 98.3 | 394±47 | Δ | Δ | ○ | × |
| Example 1 | 99.3 | 404±44 | Δ | ○ | ○ | Δ |
| Example 2 | 101 | 1287±113 ** | ⊚ | ⊚ | ○ | ⊚ |
| Example 3 | 98.8 | 678±58 | ○ | ○ | ○ | Δ |
| Example 4 | 99.2 | 482±46 | Δ | ○ | ○ | Δ |

| | | | | | | |
|---|---|---|---|---|---|---|
| **: p<0.01 | | | | | | |

In comparative examples 1 to 4 in which cross-linked starch was blended, the starch-derived pastiness was strong and was ultimately evaluated as "× (unacceptable)," whereas examples 1 to 4 in which fat-processed starch was blended had reduced pastiness and a preferable texture. Additionally, in comparison to comparative examples 1 to 4 in which cross-linked starch was blended, examples 1 to 4 in which fat-processed starch was blended had improved heating yield, improved looseness, and texture closer to meat. Particularly, in example 2 in which albumen was blended in addition to fat-processed starch, pastiness, breaking load, hardness, looseness, and other texture attributes had significantly improved. Example 3 in which milk serum protein was added and example 4 in which casein sodium was added, though not comparable to example 2, were found to have improved breaking loads.

### Test example 2 (combining starch and plant-sourced protein material)

With the blended amounts of the various plant-sourced protein materials and starches being as shown in table 3, meatless hamburgers were prepared using a procedure that was otherwise the same as in test example 1.

**[Table 3]**

| | | Comp. ex. 5 | Comp. ex.6 | Comp. ex. 7 | Ex. 5 | Ex. 6 | Ex. 7 |
|---|---|---|---|---|---|---|---|
| Granular soybean protein | | 12 | 12 | 12 | 12 | 12 | 12 |
| Water for reconstituting soybean protein | | 36 | 36 | 36 | 36 | 36 | 36 |
| Chopped raw onion | | 15 | 15 | 15 | 15 | 15 | 15 |
| Soybean protein powder | | 3 | 3 | 3 | 3 | 3 | 3 |
| Water for making an emulsion curd | | 10 | 10 | 10 | 10 | 10 | 10 |
| Rapeseed oil | | 4 | 4 | 4 | 4 | 4 | 4 |
| Cross-linked starch | | 6 | 6 | 6 | - | - | - |
| Fat-processed starch | | - | - | - | 6 | 6 | 6 |
| Pea protein | | - | 2 | - | - | 2 | - |
| Wheat protein | | - | - | 2 | - | - | 2 |
| Breadcrumbs | | 4 | 4 | 4 | 4 | 4 | 4 |
| Seasoning | Soy sauce | 5 | 5 | 5 | 5 | 5 | 5 |
| | Sweet *sake* | 1 | 1 | 1 | 1 | 1 | 1 |
| | Sugar | 1 | 1 | 1 | 1 | 1 | 1 |
| | Bouillon | 0.7 | 0.7 | 0.7 | 0.7 | 0.7 | 0.7 |
| | Spice | 0.3 | 0.3 | 0.3 | 0.3 | 0.3 | 0.3 |
| Total | | 98 | 100 | 100 | 98 | 100 | 100 |

| | | | | | | | |
|---|---|---|---|---|---|---|---|
| granular soybean protein: Fuji Oil Co., Ltd. soybean protein powder: Fuji Oil Co., Ltd. cross-linked starch: Nihon Shokuhin Kako Co., Ltd. fat-processed starch: Nihon Shokuhin Kako Co., Ltd. pea protein: Organo Foodtech Corporation wheat protein: Glico Nutrition Co., Ltd. | | | | | | | |

The meatless hamburgers thus obtained were evaluated and analyzed using the same procedure as test example 1. The results are shown in table 4.

**[Table 4]**

| | Heating yield (%) | Breaking load (g) | Hardness | Looseness | Juiciness | Lack of pastiness |
|---|---|---|---|---|---|---|
| Comp. Ex. 5 | 98.4 | 479±71 | Δ | Δ | ○ | X |
| Comp. Ex. 6 | 100 | 587±59 | ○ | Δ | ○ | X |
| Comp. Ex. 7 | 99.2 | 558±38 | Δ | Δ | ○ | X |
| Example 5 | 99.9 | 454±46 | Δ | ○ | ○ | Δ |
| Example 6 | 100.4 | 663±75 * | ○ | ○ | ○ | ○ |
| Example 7 | 101.1 | 608±57 | ○ | ○ | ○ | ○ |

| | | | | | | |
|---|---|---|---|---|---|---|
| *: p<0.05 | | | | | | |

In comparative examples 5 to 7 in which cross-linked starch was blended, the starch-derived pastiness was strong and was ultimately evaluated as "× (unacceptable)," whereas examples 5 to 7 in which fat-processed starch was blended had reduced pastiness and a preferable texture. Additionally, in comparison to comparative examples 5 to 7 in which cross-linked starch was blended, examples 5 to 7 in which fat-processed starch was blended had improved heating yield, improved looseness, and texture closer to meat. In example 6 in which pea protein was blended in addition to fat-processed starch, the breaking load, hardness, and lack of pastiness had improved. In example 7 in which wheat protein was added, the heating yield, looseness, and lack of pastiness had improved.

### Test example 3 (Meat analogue processed food product with meat material blended in)

Beef, pork, and pork fat were respectively chopped into *φ*6 mm, *φ*6 mm, and *φ*3 mm pieces of meat material, which was blended, and with the blended amounts of the various raw materials being as shown in table 5, hamburgers were prepared using a procedure that was otherwise the same as in test example 1. The meat materials were added before the seasonings were added.

**[Table 5]**

| | | Comp. ex. 8 | Comp. ex. 9 | Ex. 8 | Ex. 9 |
|---|---|---|---|---|---|
| Meat material | Beef (*φ*6 mm) | 11 | 11 | 11 | 11 |
| | Pork (*φ*6 mm) | 8 | 8 | 8 | 8 |
| | Pork fat (*φ*3 mm) | 3 | 3 | 3 | 3 |
| Granular soybean protein | | 5 | 5 | 5 | 5 |
| Water for reconstituting soybean protein | | 15 | 15 | 15 | 15 |
| Chopped raw onion | | 18 | 18 | 18 | 18 |
| Soybean protein powder | | 3 | 3 | 3 | 3 |
| Water for making an emulsion curd | | 10 | 10 | 10 | 10 |
| Rapeseed oil | | 4 | 4 | 4 | 4 |
| Cross-linked starch | | 6 | 6 | - | - |
| Fat-processed starch | | - | - | 6 | 6 |
| Albumen powder | | - | 2 | - | 2 |
| Breadcrumbs | | 4 | 4 | 4 | 4 |
| Seasoning | Soy sauce | 5 | 5 | 5 | 5 |
| | Sweet *sake* | 1 | 1 | 1 | 1 |
| | Sugar | 1 | 1 | 1 | 1 |
| | Bouillon | 0.7 | 0.7 | 0.7 | 0.7 |
| | Spice | 0.3 | 0.3 | 0.3 | 0.3 |
| | Water | 5 | 5 | 5 | 5 |
| Total | | 100 | 102 | 100 | 102 |

| | | | | | |
|---|---|---|---|---|---|
| granular soybean protein: Fuji Oil Co., Ltd. soybean protein powder: Fuji Oil Co., Ltd. cross-linked starch: Nihon Shokuhin Kako Co., Ltd. fat-processed starch: Nihon Shokuhin Kako Co., Ltd. albumen powder: Kewpie Corporation | | | | | |

The hamburgers thus obtained were evaluated and analyzed using the same procedure as test example 1. The results are shown in table 6.

**[Table 6]**

| | Heating yield (%) | Breaking load (g) | Hardness | Looseness | Juiciness | Lack of pastiness |
|---|---|---|---|---|---|---|
| Comp. Ex. 8 | 98.1 | 565±84 | Δ | × | ○ | × |
| Comp. Ex. 9 | 98.9 | 1073±178 ** | Δ | Δ | ○ | Δ |
| Example 8 | 98.9 | 803±108 ** | ○ | ○ | ○ | ○ |
| Example 9 | 100 | 1491±188 ** | ⊚ | ⊚ | ⊚ | ⊚ |

| | | | | | | |
|---|---|---|---|---|---|---|
| *: p<0.01 | | | | | | |

Even hamburgers in which about 22 mass% of meat material was blended in had the improved results from blending in fat-processed starch as with the meatless hamburgers of test examples 1 and 2, particularly the considerably improved results from combining and blending albumen with fat-processed starch.

### Test example 4 (Test using plant-protein-containing material instead of soybean protein material)

Meatless hamburgers were prepared via the following procedure, using a plant-protein-containing material (peas, soybeans) as a substitute for the soybean protein material. According to the aforementioned Standard Tables of Food Composition in Japan (7^{th} edition), the protein content per dry weight in peas and soybeans is about 22% and about 34%, respectively. The blended amounts of the individual raw materials are as shown in table 7. A pea protein material and water were mixed together, then rapeseed oil was added and the contents were uniformly mixed to obtain an emulsion curd. Steamed and roughly crushed peas or soybeans were then added, seasoning, albumen, starch, onion, and breadcrumbs were added in the stated order, and the ingredients were mixed in a mixer, thus preparing a dough. The dough was molded into round shapes weighing 50 g each, the dough were baked (50 sec per side × 2 at 230°C) and steamed (15 min at 85°C) in that order, and the resultants were cooled, thus obtaining meatless hamburgers. A starch having tapioca starch as the raw material was used as the cross-linked starch or the fat-processed starch (oil/fat-processed cross-linked starch).

**[Table 7]**

| | | Comp. ex. 10 | Ex. 10 | Comp. ex. 11 | Ex. 11 |
|---|---|---|---|---|---|
| Peas | | 40 | 40 | - | - |
| Soybeans | | - | - | 40 | 40 |
| Chopped raw onion | | 17 | 17 | 17 | 17 |
| Pea protein | | 5 | 5 | 5 | 5 |
| Water for making an emulsion curd | | 11 | 11 | 11 | 11 |
| Rapeseed oil | | 4 | 4 | 4 | 4 |
| Cross-linked starch | | 6 | - | 6 | - |
| Fat-processed starch | | - | 6 | - | 6 |
| Albumen powder | | 2 | 2 | 2 | 2 |
| Breadcrumbs | | 6 | 6 | 6 | 6 |
| Seasoning | Soy sauce | 5 | 5 | 5 | 5 |
| | Sweet *sake* | 1.5 | 1.5 | 1.5 | 1.5 |
| | Sugar | 1.2 | 1.2 | 1.2 | 1.2 |
| | Seasoning (amino acid, etc.) | 0.8 | 0.8 | 0.8 | 0.8 |
| | Spice | 0.3 | 0.3 | 0.3 | 0.3 |
| | Crystal cellulose | 0.2 | 0.2 | 0.2 | 0.2 |
| Total | | 100 | 100 | 100 | 100 |

| | | | | | |
|---|---|---|---|---|---|
| pea protein: Organo Foodtech Corporation albumen powder: Kewpie Corporation seasoning (amino acid, etc.): Mitsubishi Corporation Life Sciences Limited Crystal cellulose: Asahi Kasei Corporation | | | | | |

The meatless hamburgers thus obtained were evaluated and analyzed using the same procedure as test example 1. The results are shown in table 8.

**[Table 8]**

| | Heating yield (%) | Breaking load (g) | Hardness | Looseness | Juiciness | Lack of pastiness |
|---|---|---|---|---|---|---|
| Comp. Ex. 10 | 99.3 | 825±129 | ○ | ○ | ○ | Δ |
| Comp. Ex. 11 | 99.9 | 506±75 | ○ | ○ | ○ | × |
| Example 10 | 99.9 | 1172±159 ** | ⊚ | ⊚ | ○ | ○ |
| Example 11 | 99.9 | 608±57 ** | ⊚ | ⊚ | ○ | ○ |

| | | | | | | |
|---|---|---|---|---|---|---|
| *: p<0.01 | | | | | | |

Even when peas or soybeans, which are plant-protein-containing materials, are blended in as a substitute for soybean protein material, in comparison to the meatless hamburgers in which cross-linked starch was blended in (comparative examples 10 and 11), the meatless hamburgers in which fat-processed starch was blended in (examples 10 and 11) were preferred with reduced pastiness, and also had improved hardness and looseness and a texture closer to meat. Therefore, while soybean protein material is not provided by way of limitation, it was confirmed that the effects of the present invention were adequately exhibited even in a meat analogue processed food product in which a plant-protein-containing material, typically beans, is used as a substitute for meat.

## Claims

1. A meat analogue processed food product, the product **characterized by** containing a fat-processed starch and a plant-protein-containing material and having a meat material content of 30 mass% or less.

2. The meat analogue processed food product according to claim 1, the plant-protein-containing material being prepared from beans.

3. The meat analogue processed food product according to claim 2, the plant-protein-containing material being a soybean protein material or a pea protein material.

4. The meat analogue processed food product according to any one of claims 1 to 3, further containing one or more material selected from animal-sourced protein materials other than the meat material and plant-sourced protein materials other than the plant-protein-containing material.

5. The meat analogue processed food product according to claim 4, the meat material content relative to the total amount of the plant-protein-containing material, the meat material, the animal-sourced protein materials other than the meat material, and the plant-sourced protein materials other than the plant-protein-containing material being 75 mass% or less.

6. The meat analogue processed food product according to claim 4 or 5, the animal-sourced protein materials being selected from a milk protein material and an albumen, and the plant-sourced protein materials being selected from a pea protein material and a wheat protein material.

7. The meat analogue processed food product according to claim 6, containing an albumen as the animal-sourced protein material.

8. The meat analogue processed food product according to any one of claims 1 to 7, the fat-processed starch content being 0.5-10 mass%.

9. The meat analogue processed food product according to any one of claims 1 to 8, not containing the meat material.

10. A method for producing a meat analogue processed food product, the method **characterized in that** a raw material containing a fat-processed starch and a plant-protein-containing material and having a meat material content of 30 mass% or less is mixed, molded, and heated.

11. The method for producing a meat analogue processed food product according to claim 10, the plant-protein-containing material being prepared from beans.

12. The method for producing a meat analogue processed food product according to claim 11, the plant-protein-containing material being a soybean protein material or a pea protein material.

13. The method for producing a meat analogue processed food product according to any one of claims 10 to 12, the raw material further containing one or more material selected from animal-sourced protein materials excluding the meat material and plant-sourced protein materials excluding the plant-protein-containing material.

14. The method for producing a meat analogue processed food product according to claim 13, the method using a raw material in which the meat material content relative to the total amount of the meat material, the plant-protein-containing material, the animal-sourced protein materials other than the meat material, and the plant-sourced protein materials other than the plant-protein-containing material being 75 mass% or less.

15. The method for producing a meat analogue processed food product according to claim 13 or 14, the animal-sourced protein materials being selected from a milk protein material and an albumen, and the plant-sourced protein materials being selected from a pea protein material and a wheat protein material.

16. The method for producing a meat analogue processed food product according to claim 15, containing an albumen as the animal-sourced protein material.

17. The method for producing a meat analogue processed food product according to any one of claims 10 to 16, the fat-processed starch content in the raw material being 0.5-10 mass%.

18. The method for producing a meat analogue processed food product according to any one of claims 10 to 17, the raw material not containing the meat material.

19. An additive for a meat analogue processed food product that contains a plant-protein-containing material and has a meat material content of 30 mass% or less, the additive **characterized by** containing a fat-processed starch.

20. The additive for a meat analogue processed food product according to claim 19, the meat analogue processed food product being a food product that does not contain a meat material.
